# EUROPÄISCHE PATENTSCHRIFT

(11) **EP 1 620 219 B1**
(45) Veröffentlichungstag und Bekanntmachung des Hinweises auf die Patenterteilung: **22.05.2013**
(21) Anmeldenummer: 04717615.1
(22) Anmeldetag: 05.03.2004
(51) Int. Cl.: B23B 29/034

(54) **AUSBOHRWERKZEUG**
DRILLING TOOL
OUTIL DE FORAGE

(30) Priorität: 04.04.2003 DE 10315394
(43) Veröffentlichungstag der Anmeldung: 01.02.2006
(73) Patentinhaber: Sandvik Intellectual Property AB, 811 81 Sandviken (SE)
(72) Erfinder: FRANK, Peter, 98593 Floh-Seligenthal (DE)
(74) Vertreter: Weber, Roland
(86) Internationale Anmeldenummer: PCT/EP2004/002256
(87) Internationale Veröffentlichungsnummer: WO 2004/087354

(56) Entgegenhaltungen:
- EP-A- 0 344 616
- EP-A- 0 564 425
- DE-A- 2 746 232
- US-A- 2 204 855

## Beschreibung

Die vorliegende Erfindung betrifft ein Bohrwerkzeug, insbesondere ein Ausbohr-Schruppwerkzeug, mit einem Grundkörper, auf dessen Stirnfläche mindestens ein Schneidplattenhalter aufgenommen werden kann. Ein solches Werkzeug dient beispielsweise zum Erweitem einer vorgearbeiteten Bohrung.

Während der Bearbeitung dreht sich das Werkzeug um eine zentrale Achse, die senkrecht auf der Stirnfläche steht. Beim Eintauchen des Werkzeugs in eine vorgearbeitete Bohrung treten die auf den Schneidplattenhaltern aufgenommenen Schneidplatten mit der Innenkontur der Bohrung in Eingriff, erweitern diese und führen gegebenenfalls die Endbearbeitung der Innenflächen durch.

Ein solches Bohrwerkzeug ist beispielsweise aus der EP 0 564 425 bekannt. Dort ist ein Bohrkopf mit einem stabförmigen Grundkörper gezeigt, an dessen freiem Ende zwei Halter für Schneideinsätze aufgenommen sind, die in radial entgegengesetzten Richtungen über die Umfangsfläche des stabförmigen Gründkörpers vorspringen und jeweils in verschiedene radiale Positionen durch Verschiebung entlang einer Nut einstellbar sind. Dieses bekannte Bohrwerkzeug hat jedoch den Nachteil, daß es nur unter großem Aufwand, im allgemeinen unter Verwendung eines Voreinstellgerätes, justierbar ist. Darüber hinaus ist die Feinjustierung der Schneidplattenhalter in radialer Richtung sehr zeitaufwendig.

Die EP 0 344 616 zeigt einen Bohrkopf mit radial gegenüber einem Tragkörper entlang von Führungen einstellbaren Schneideinsätzen, bei dem die zugehörigen Stellglieder in Gewindebohrungen der Schneideinsätze gelagert und gegenüber dem Tragkörper an Lage bestimmten Bezugsflächen abgestützt werden, die von in den Tragkörper eingreifenden Spannglieden zum Festspannen der Schneideinsätze gebildet werden. Messbezugsflächen werden von taschenförmigen Vertiefungen in einer Spannpratze gebildet, die über die Spannglieder zentriert wird.

Der vorliegenden Erfindung liegt daher die Aufgabe zugrunde, ein Bohrwerkzeug zur Verfügung zu stellen, das flexibel einsetzbar ist, dessen Schneidplattenhalter leicht und präzise einstellbar sind und das kostengünstig herzustellen ist.

Erfindungsgemäß wird diese Aufgabe dadurch gelöst, daß zumindest ein am Grundkörper fixierter Justierstift in axialer Richtung mit dem Schneidplattenhalter und/oder der Schneidplatte überlappt, so daß die radiale Einstellung des Schneidplattenhalters in Bezug auf den Grundkörper durch Messen des radialen Abstandes zwischen einem definierten Punkt des Schneidplattenhalters oder einem definierten Punkt auf der auf den Schneidplattenhalter aufgenommenen Schneidplatte und dem Justierstift erfolgen kann.

Bei den bekannten Bohrwerkzeugen besteht im allgemeinen keine Möglichkeit, die relative rädiale Verschiebung der Schneidplatte gegenüber dem Grundkörper mit mechanischen Mitteln auszumessen, um eine Feinjustierung der Schneidplatten auf dem Grundkörper zu ermöglichen, ohne den Grundkörper aus der Maschine auszubauen. Zwar ist es prinzipiell bei Bohrwerkzeugen, die eine gerade Anzahl von Schneidplattenhaltern tragen, so daß jede Schneidplatte auf eine diametral gegenüberliegende Schneidplatte trifft, möglich, den Durchmesser durch Messen des radialen Abstandes zweier gegenüberliegenden Schneidkanten zu bestimmen. Abgesehen davon, daß dieses Einstellverfahren voraussetzt, daß jeder Schneidplatte eine diametral gegenüberliegend angeordnete Schneidplatte zugeordnet ist, bietet das Verfahren jedoch nur die Möglichkeit, zwei Schneidplatten relativ zueinander, nicht aber in Bezug auf den Grundkörper, zu justieren. Zur Justierung der Schneidplatten auf dem Grundkörper muß daher im allgemeinen der Grundkörper vom Antrieb getrennt und in einem sogenannten Voreinstellgerät montiert werden, so daß eine Justierung anhand von mit Hilfe optischer Verfahren erhaltenen Messungen erfolgen kann.

Durch das Bereitstellen des erfindungsgemäßen Justierstiftes, der prinzipiell jede beliebige Form haben kann, wird ein definierter, fest mit dem Grundkörper verbundener Meßpunkt zur Verfügung gestellt, so daß beispielsweise mit Hilfe einer Schieblehre der Abstand zwischen der Schneidplatte und dem Justierstift gemessen werden kann und dadurch die relative Positionierung der Schneidplatte zu dem Justierstift und damit in Bezug auf den Grundkörper überprüft werden kann.

Mit Vorteil steht der Justierstift zumindest soweit über der Stirnfläche des Grundkörpers vor, daß er über die obere Fläche des Schneidplattenhalters vorsteht. Durch diese Maßnahme ist ein leichter Zugriff auf den Justierstift gewährleistet, um ein zügiges Ausmessen und Einrichten des Werkzeuges zu ermöglichen. Allerdings sollte der Justierstift nicht in axialer Richtung über die auf dem Schneidplattenhalter montierte Schneidplatte vorstehen, da sonst beispielsweise die Bohrung eines Sackloches nicht möglich wäre.

In einer vorteilhaften Ausgestaltung ist für jeden Schneidplattenhalter ein eigener Justierstift vorgesehen.

Es hat sich jedoch gezeigt, daß, insbesondere bei Bohrwerkzeugen mit kleinem Bohrdurchmesser, der Justierstift mit Vorteil auf der Drehachse des Bohrwerkzeuges, d. h. im Zentrum des Werkzeuges, angeordnet ist. Dies hat den Vorteil, daß es im allgemeinen möglich ist, für das mechanische Messen der Position jedes Schneidplattenhalter bzw. jeder Schneidplatte auf denselben Justierstift zuzugreifen, so daß sich die aufwendige Herstellung und Befestigung einer Vielzahl von Justierstiften erübrigt.

Prinzipiell kann der Justierstift jede beliebige Form haben. In der Praxis hat sich eine zylindrische Form bewährt. Alternativ dazu kann der Justierstift jedoch auch eine N-eckige Form haben, wobei N die Anzahl der auf dem Grundkörper aufnehmbaren Schneidplattenhalter ist. Es hat den Vorteil, daß zum Messen des radialen Abstandes zwischen Justierstift und Schneidplatte an dem Justierstift eine entsprechende Anlagefläche zur Verfügung gestellt wird, so daß der Meßvorgang beschleunigt wird.

Der Justierstift ist von besonderem Vorteil, wenn eine ungerade Anzahl von Schneidplattenhaltern auf dem Grundkörper aufgenommen wird, da dann den einzelnen Schheidplatten auf den Schneidplattenhaltern keine diametral gegenüberliegende Schneidplatte zugeordnet ist und eine Kontrolle der Justierung durch Messung des Abstandes zweier diametral gegenüberliegender Schneidplatten nicht möglich ist.

In einer besonderes bevorzugten Ausführungsform weist die Stirnfläche mindestens eine, in radialer Richtung verlaufende Nut auf, die für die Aufnahme eines der Nutform entsprechenden, vorzugsweise länglichen Vorsprungs des Schneidplattenhalters vorgesehen ist. Es hat sich gezeigt, daß diese Anordnung eine präzise radiale Einstellung des Schneidplattenhalters gegenüber dem Grundkörper ermöglicht, wobei gleichzeitig eine Fehlausrichtung in Umfangsrichtung weitgehend minimiert wird. Zudem läßt sich die Nutverbindung kostengünstig herstellen.

Besonders bevorzugt hat die Nut einen im wesentlichen U-förmigen Querschnitt, wobei der U-Grund vorzugsweise mit dem U-Schenkel einen rechten Winkel bildet.

Die einzelnen Nuten erstrecken sich vorzugsweise bis zum Zentrum, so daß der im Zentrum angeordnete Justierstift gleichzeitig als Anschlag bzw. Widerlager für ein in den länglichen Vorsprung eines Schneidplattenhalters angeordnete Feinjustierschraube dienen kann.

Diese erfindungsgemäße Doppelfunktion des Justierstiftes ermöglicht somit nicht nur eine extrem genaue Feinjustierung, sondern darüber hinaus auch die Möglichkeit, die Justierung mit einfachen Mitteln zu überprüfen.

Insbesondere bei Bohrwerkzeugen mit großem Bohrdurchmesser hat sich jedoch gezeigt, daß die gleichzeitige Verwendung des zentral angeordneten Justierstiftes als Widerlager bzw. Anschlag für eine entsprechende Feinjustierschraube umständlich ist, da gegebenenfalls die Feinjustierschraube sehr lang ausgeführt werden muß und entsprechend viele Umdrehungen der Feinjustierschraube von Nöten sind, bevor diese mit dem zentral angeordneten Justierstift in Eingriff tritt und eine Feinjustierung möglich wird.

Daher ist in einer weiteren besonders bevorzugten Ausführungsform vorgesehen, daß der Nutgrund zumindest einen Vorsprung, vorzugsweise in Form eines Stiftes aufweist, der dafür vorgesehen ist, in eine Ausnehmung in dem Schneidplattenhalter zu greifen, um die radiale Verschiebbarkeit des Schneidplattenhalters zu begrenzen. Dies hat darüber hinaus den Vorteil, daß, insbesondere bei der Einrichtung des Werkzeuges in einer waagerechten Position, der Schneidplattenhalter auf den Grundkörper aufgesetzt werden kann und dort verbleibt, selbst wenn zusätzliche Befestigungseinrichtungen noch nicht montiert sind. Dadurch, daß der Vorsprung in eine vorzugsweise längliche Ausnehmung in dem Schneidplattenhalter greift, wird zwar einerseits eine gewisse radiale Verstellbarkeit des Schneidplattenhalters relativ zu dem Grundkörper möglich, andererseits jedoch diese derart begrenzt, daß ein versehentliches Herausrutschen des Schneidplattenhalters entlang der Nut nach außen wirksam verhindert wird.

In einer weiteren besonders bevorzugten Ausführungsform ist vorgesehen, daß eine Einrichtung zum Halten eines Schneidplattenhalters an der Stirnfläche mit einer einstellbaren Haltekraft vorgesehen ist. Dadurch ist es beispielsweise möglich, den Schneidplattenhalter zunächst mit einer entsprechend eingestellten Haltekraft vorläufig auf den Grundkörper zu fixieren. Dadurch kann ein versehentliches Verrutschen des Schneidplattenhalters auf dem Grundkörper, das insbesondere bei der Überkopfmontage des Schneidplattenhalters auf dem Grundkörper erfolgen kann, verhindert werden. Die einstellbare Haltekraft kann jedoch durch Ausüben einer entsprechenden Justierkraft überwunden werden, so daß zu Zwecken der Feinjustierung des Schneidplattenhalters auf dem Grundkörper eine radiale Beweglichkeit des Schneidplattenhalters auf dem Grundkörper dennoch gegeben ist. Nachdem die Feinjustierung erfolgt ist, kann dann der Schneidplattenhalter endgültig auf dem Grundkörper fixiert werden.

Die Einrichtung zum Halten eines Schneidplattenhalters besteht vorzugsweise aus einer Schraube, die dafür vorgesehen ist, durch eine als Langloch ausgebildete Bohrung in dem Schneidplattenhalter zu greifen, und einer Feder, vorzugsweise einer Tellerfeder. Dadurch, daß die Schraube durch die als Langloch ausgebildete Bohrung greift, ist eine radiale Beweglichkeit des Schneidplattenhalters auf dem Grundkörper möglich, ohne daß die Gefahr des versehentlichen Verlusts des Schneidplattenhalters besteht. Mit Hilfe der Feder bzw. der Tellerfeder, die mit Hilfe der Schraube eine Kraft auf den Schneidplattenhalter ausübt, kann die Haltekraft entsprechend eingestellt werden. In einem ersten Schritt werden daher der Schneidplattenhalter mit Hilfe der Schraube und der Tellerfeder mit einer bestimmten Haltekraft fixiert, dann entsprechend feinjustiert und schließlich die Schraube vollends angezogen, so daß selbst während der spanenden Bearbeitung eine Relativverschiebung des Schneidplattenhalters auf dem Grundkörper ausgeschlossen ist.

Es versteht sich, daß die Einrichtung mit einstellbarerer Haltekraft mit Vorteil auch bei den bekannten Bohrwerkzeugen mit Grundkörper, auf dessen Stirnfläche mindestens ein Schneidplattenhalter aufgenommen werden kann, eingesetzt werden kann. Die Einrichtung mit einstellbarer Haltekraft ist somit nicht an das Vorhandensein eines Justierstiftes geknüpft, sondern kann mit Vorteil zur Befestigung aller Arten von Schneidplattenhaltern auf Grundkörpern oder auch von Schneidplatten auf Schneidplattenhaltern verwendet werden.

In einer weiteren besonders bevorzugten Ausführungsform weist das Bohrwerkzeug eine Einrichtung zur axialen Einstellung des Schneidplattenhalters auf. Gerade bei der Verwendung von mehreren Schneidplattenhaltern ist es bei manchen Anwendungsfällen von Vorteil, wenn die einzelnen Schneidplatten, die auf dem Schneidplattenhalter aufgenommen sind, in axialer Richtung gegeneinander versetzt sind.

Mit Vorteil besteht die Einrichtung zur axialen Einstellung des Schneidplattenhalters aus Unterlegelementen, die dafür vorgesehen sind, zwischen Schneidplattenhalter und Stirnfläche des Grundkörpers angeordnet zu werden. Durch entsprechende Auswahl der Dicke des Unterlegelementes kann die axiale Einstellung des Schneidplattenhalters in Bezug auf den Grundkörper erfolgen. Diese Ausführungsform ist insbesondere von Vorteil in Kombination mit der auf dem Grundkörper angeordneten im wesentlichen u-förmigen Nut, in die ein entsprechender Vorsprung, dessen Querschnitt vorzugsweise der Innenfläche der Nut angepaßt ist, eingreift, da zwar durch das Vorsehen von Unterlegelementen der Vorsprung dann weniger tief in die Nut eingreift, aber dennoch eine entsprechende Führung beibehalten wird, so daß der Halter im wesentlichen nur in radialer Richtung verschoben werden kann.

Mit Vorteil ist für jeden Schneidplattenhalter eine Einrichtung zur radialen Einstellung des Schneidplattenhalters vorgesehen. Für manche Anwendungsfälle kann es von Vorteil sein, wenn jeder Schneidplattenhalter separat in radialer Richtung eingestellt werden kann.

Weiterhin betrifft die vorliegende Erfindung nach Anspruch 15 einen Schneidplattenhalter mit einem Bohrwerkzeug der eingangs beschriebenen Art.

Dadurch ist eine sehr präzise radiale Einstellung des Schneidplattenhalters in Bezug auf den Grundkörper möglich.

Bei einer zweckmäßigen Ausführungsform ist die Justierschraube in Längsrichtung durch zumindest einen Teil des länglichen Vorsprungs angeordnet. Da der längliche Vorsprung in die in radialer Richtung verlaufende Nut des Grundkörpers eingreift, stellt diese Maßnahme sicher, daß auch die Justierschraube in radialer Richtung orientiert ist, wodurch eine besonders effektive und präzise Kraftübertragung von der Schraube auf das Anschlagelement möglich ist.

In einer alternativen Ausführungsform weist der längliche Vorsprung eine vorzugsweise längliche Aussparung auf, die derart angeordnet ist, daß ein auf dem Nutgrund der Stirnfläche des Bohrwerkzeuges angeordneter Vorsprung in die Aussparung eingreift und dadurch die radiale Verschiebbarkeit des Schneidplattenhalters in der Nut zumindest in eine Richtung begrenzt.

Darüber hinaus ist es von Vorteil, wenn der längliche Vorsprung eine Gewindebohrung aufweist, die sich in Längsrichtung des Schneidplattenhalters in die längliche Aussparung öffnet. Dadurch kann durch Verstellen der Justierschraube erreicht werden, daß sich die Spitze der Schraube an den in die Aussparung eingreifenden Vorsprung abstützt, so daß eine effektive und präzise Einstellung des Schneidplattenhalters in Bezug auf den Grundkörper möglich wird.

In einer weiteren besonders zweckmäßigen Ausführungsform weist der Schneidplattenhalter ein Langloch zur Befestigung des Schneidplattenhalters auf dem Grundkörper mittels einer sich durch das Langloch erstreckenden und in eine Gewindebohrung auf dem Grundkörper eingreifenden Schraube auf.

Weiterhin ist in einer besonders bevorzugten Ausführungsform vorgesehen, daß auf der der Auflagefläche abgewandten Seite des Langloches eine Ausfräsung zur Aufnahme einer zwischen Schraubenkopf und Langloch angeordneten Tellerfeder vorgesehen ist.

Weitere Vorteile, Merkmale und Anwendungsmöglichkeiten werden deutlich anhand der folgenden Beschreibung bevorzugter Ausführungsformen sowie der dazugehörigen Figuren. Es zeigen:
- Figur 1: eine perspektivische Ansicht eines vollständig montierten Bohrwerkzeuges gemäß einer ersten Ausführungsform,
- Figur 2: eine perspektivische Ansicht des vollständig montierten Bohrwerkzeuges, die die axiale Einstellbarkeit der Schneidplatten demonstriert,
- Figur 3: eine Ansicht von oben auf das Bohrwerkzeug von Figur 1, die die radiale Einstellbarkeit der Schneidplatten demonstriert,
- Figur 4: eine Ansicht von oben auf einen Grundkörper,
- Figur 5: eine Seitenansicht auf den Grundkörper von Figur 4,
- Figur 6: eine Schnittansicht entlang der Linie A-A von Figur 4,
- Figur 7: eine Ansicht von oben auf einen Schneidplattenhalter,
- Figur 8: eine Seitenansicht auf den Schneidplattenhalter von Figur 7,
- Figur 9: eine Schnittansicht durch den Schneidplattenhalter der Figuren 7 und 8,
- Figur 10: eine Seitenansicht auf den Grundkörper der ersten Ausführungsform mit aufgesetzten Schneidplattenhaltern,
- Figur 11: eine Schnittansicht entlang der Linie C-C von Figur 10,
- Figur 12: eine Schnittansicht entlang der Linie B-B von Figur 10,
- Figur 13: eine Ansicht von oben auf das Bohrwerkzeug der ersten Ausführungsform,
- Figur 14: eine Schnittansicht entlang der Linie A-A von Figur 13,
- Figur 15: eine Schnittansicht entlang der Linie D-D von Figur 13,
- Figur 16: eine Seitenansicht auf einen Grundkörper einer zweiten Ausführungsform,
- Figur 17: eine Ansicht von oben auf den Grundkörper der zweiten Ausführungsform von Figur 16,
- Figur 18: eine Schnittansicht entlang der Linie A-A von Figur 17,
- Figur 19: eine Seitenansicht auf einen Schneidplattenhalter einer zweiten Ausführungsform,
- Figur 20: eine Ansicht von oben auf den Schneidplattenhalter von Figur 19,
- Figur 21: eine Schnittansicht entlang der Linie A-A von Figur 20 und
- Figur 22: eine perspektivische Ansicht einer dritten Ausführungsform.

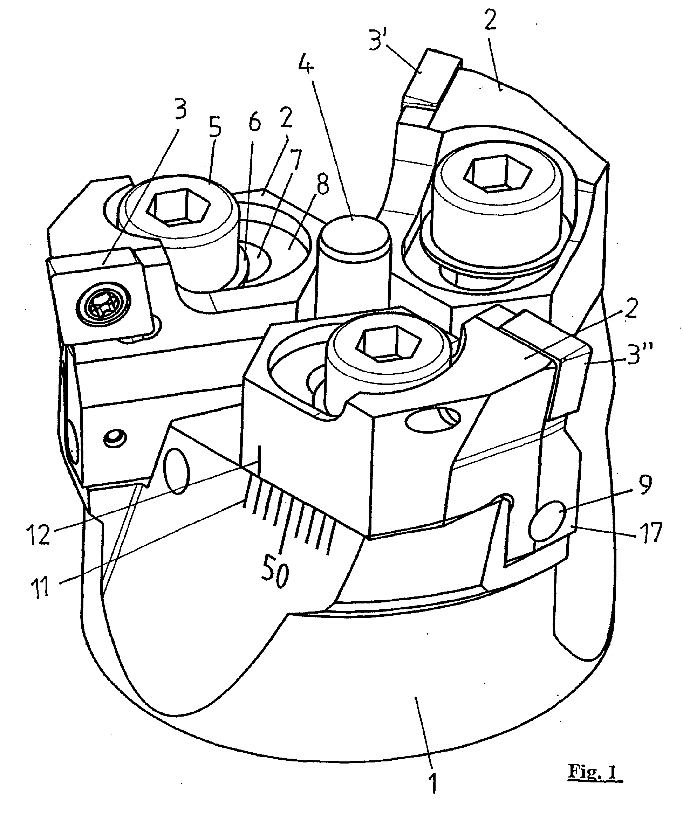

Figur 1 zeigt eine perspektivische Ansicht eines vollständig zusammengesetzten Bohrwerkzeuges gemäß einer ersten Ausführungsform der vorliegenden Erfindung.

Das Bohrwerkzeug weist einen Grundkörper 1 auf, auf dessen Stirnfläche 14 mehrere Schneidplattenhalter 2 aufgenommen sind, die jeweils einen Schneideinsatz bzw. eine Schneidplatte 3, 3', 3" tragen. Die Schneidplattenhalter 2 sind mit Hilfe einer Schraube 5, die durch eine Bohrung 7 in dem Schneidplattenhalter 2 in die Stirnfläche des Grundkörpers 1 eingreift, am Grundkörper 1 befestigt. Deutlich zu erkennen ist in Figur 1 der Justierstift 4, der über die Stirnfläche des Grundkörpers 1 derart vorsteht, daß die radiale Einstellung der Schneidplattenhalter 2 in Bezug auf den Grundkörper 1 durch Messen des Abstandes a zwischen einem definierten Punkt des Schneidplattenhalters 2 oder einem definierten Punkt auf der auf den Schneidplattenhalter 2 aufgenommenen Schneidplatte 3, 3', 3" und dem Justierstift 4 erfolgen kann. Diese Funktion wird im folgenden noch ausführlich beschrieben.

Die einzelnen Schneidplattenhalter 2 mit den Schneidplatten 3, 3', 3" können jeweils separat sowohl in axialer Richtung als auch in radialer Richtung eingestellt werden.

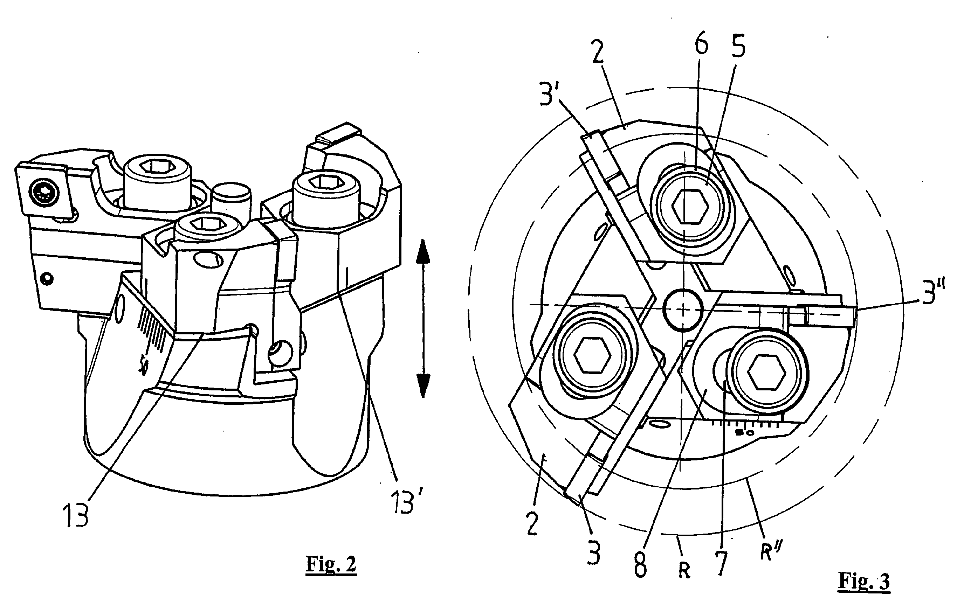

In Figur 2 ist eine perspektivische Ansicht des Bohrwerkzeuges von Figur 1 gezeigt, das die axialen Einstellbarkeit der Schneidplattenhalter 2 demonstriert. Deutlich zu erkennen ist, daß zwischen zweien der drei Schneidplattenhalter 2 und dem Grundkörper 1 ein Unterlegelement 13, 13' angeordnet ist, so daß sich die einzelnen Schneidplattenhalter 2 in axialer Richtung (durch einen Doppelpfeil dargestellt) zueinander versetzt sind. Die beiden Distanz- bzw. Unterlegelemente 13 und 13' haben eine unterschiedliche Dicke. Während des Betriebes rotiert der Ausbohrkopf um seine Drehachse und wird in axialer Richtung in das Werkstück eingeführt, d. h. in Figur 2 nach oben bewegt. Durch die in axialer Richtung unterschiedlich eingestellten Schneidplatten 3 treten diese an Punkten mit unterschiedlichen axialer Anordnung mit dem Werkstück in Eingriff.

Figur 3 zeigt eine Ansicht von oben auf das Bohrwerkzeug von Figur 1 und verdeutlicht die radiale Einstellbarkeit der Schneidplattenhalter 2 auf dem Grundkörper 1. Deutlich zu erkennen ist, daß die Schneidplattenhalter 2 aufgrund ihrer als Langloch ausgebildeten Bohrungen 7 in radialer Richtung unterschiedlich positioniert werden können. Ihre genaue Positionierung und Justierung wird weiter unten beschrieben. In Figur 3 ist zu erkennen, daß die Schneidplatte 3 in radialer Richtung am weitesten nach außen versetzt ist. Der Schnittradius der Schneidplatte 3 hat die Größe R. Die Schneidplatte 3", die in Figur 3 nach rechts zeigend dargestellt ist, ist in radialer Richtung am wenigsten nach außen verschoben, so daß sie einen Radius R" beschreibt. Die dritte Schneidplatte 3' beschreibt einen Bohrradius, der zwischen R und R" liegt.

Bei der gezeigten Einstellung fungiert das Bohrwerkzeug genau genommen nicht als dreischneidiges Bohrwerkzeug, sondern als Bohrwerkzeug mit drei einschneidigen Werkzeugen. Dabei ist der Schneidplattenhalter, der in axialer Richtung am weitesten nach "vorn" angeordnet ist, in radialer Richtung am weitesten "innen" angeordnet. Somit tritt die Schneidplatte, die auf dem Halter, der axial am weitesten vorne angeordnet ist, d.h. dem das Distanzelement 13, 13' mit größter Dicke zugeordnet ist, als erstes mit dem Werkstück in Eingriff und bohrt eine erste Bohrung mit dem kleinsten Radius R". Danach treten sukzessive die anderen Schneidplatten, die entsprechend in axialer Richtung zurückgesetzt in radialer Richtung aber weiter nach außen versetzt sind, mit dem Werkstück in Eingriff. Genau genommen wird hier also eine Stufenbohrung vorgenommen, wobei jede Schneidplatte jeweils für sich allein eine Bohrung ausbildet. Durch diese Anordnung kann die Schnittiefe, die mit dem Werkzeug erzielt werden kann verdreifacht (entsprechend der Anzahl der Schneiden) werden. Dabei wird jedoch der Vorschub auf ein Drittel reduziert.

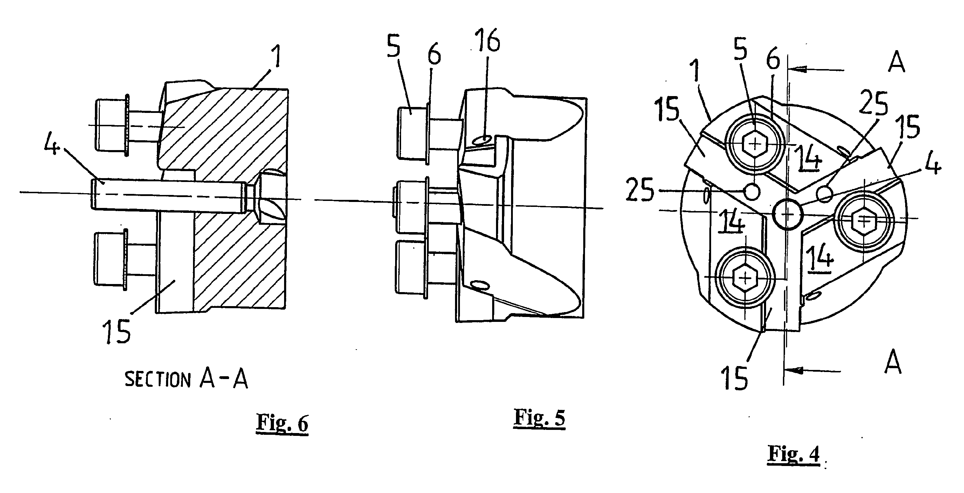

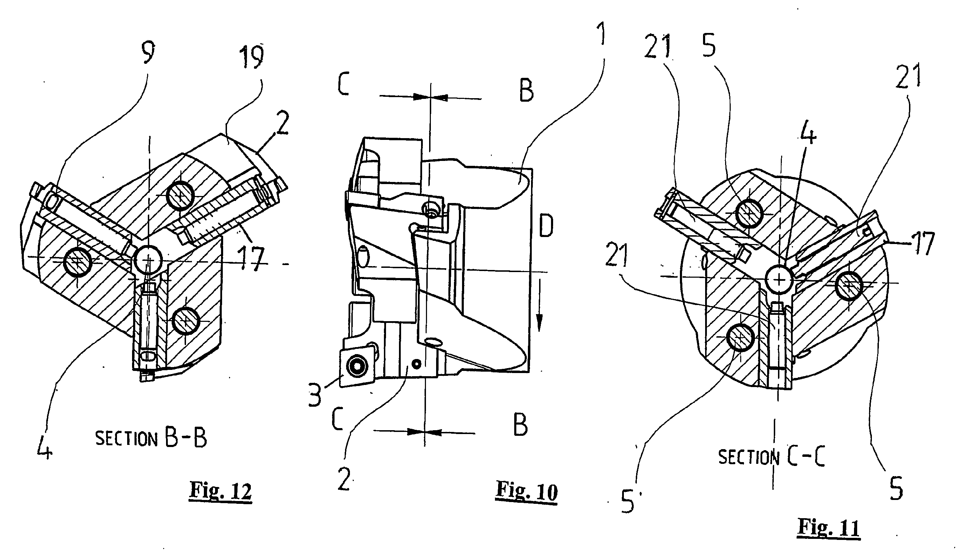

Zur Verdeutlichung der radialen Einstellbarkeit der einzelnen Schneidplattenhalter 2 auf den Grundkörper 1 sind in den Figuren 4 bis 9 die beteiligten Elemente separat in verschiedenen Ansichten gezeigt und in den Figuren 10 bis 15 ist die Wechselwirkung der einzelnen Elemente miteinander dargestellt.

Figur 4 zeigt eine Draufsicht auf den Grundkörper 1 von Figur 1, wobei hier die die Schneidplatten 3, 3', 3" tragenden Schneidplattenhalter 2 entfernt wurden. Zu erkennen ist die Stirnfläche 14 des Grundkörpers 1, in die die Befestigungsschrauben 5, die für die Befestigung der Schneidplattenhalter 2 auf dem Grundkörper 1 vorgesehen sind, eingeschraubt sind. Die Stirnfläche 14 weist eine Reihe von sich in radialer Richtung erstreckenden Nuten 15 auf. Diese Nuten dienen dazu, entsprechende Vorsprünge 17, die an den Schneidplattenhaltern 2 angeordnet sind, aufzunehmen, so daß der Vorsprung 17 des Schneidplattenhalters 2 innerhalb der Nut 15 in radialer Richtung verschoben werden kann. Bei der gezeigten bevorzugten Ausführungsform sind drei Nuten dargestellt, die mit gleichen Abständen angeordnet sind, d.h. miteinander einen Winkel von 120° (= 360° geteilt durch die Anzahl der Schneiden) einschließen. Für manche Anwendungsfälle kann es jedoch von Vorteil sein, wenn die einzelnen Nuten und damit auch die Schneiden nicht gleichmäßig entlang des Umfangs des Werkzeuges angeordnet sind. Gerade bei der symmetrischen Anordnung der Schneiden kann es nämlich in manchen Fällen zu unerwünschten Schwingungen kommen. Daher sind beispielsweise schon Werkzeuge mit drei Nuten, die jeweils mit Winkeln zwischen 100 und 130° zueinander angeordnet sind, mit Erfolg eingesetzt worden.

Bei der in den Figuren dargestellten Ausführungsform erstrecken sich die Nuten 15 in der Stirnfläche 14 des Grundkörpers 1 in der in radialer Richtung von dem Justierstift 4 nach außen.

In Figur 5 ist eine Seitenansicht des Grundkörpers ohne aufgesetzte Schneidplattenhalter gezeigt. Zu erkennen ist, daß in der gezeigten Ausführungsform jeder Nut 15 ein entsprechender Kühlmittelauslaß 16 zugeordnet ist, so daß bei aufgesetztem Schneidplattenhalter 2 die Schneidplatte 3 über die Kühlmittelzufuhr 16 mit Kühlmittel versorgt werden kann.

Figur 6 zeigt eine Schnittansicht entlang der Linie A-A von Figur 4. Die Nut 15, die einen im wesentlichen U-förmigen Querschnitt hat, erstreckt sich bis zu dem Justierstift 4. Weiterhin sind in den Figuren 4 bis 6 Tellerfedern 6 zu erkennen, die mit jeder der Schrauben 5 zur Befestigung des Schneidplattenhalters 2 auf der Stirnfläche 14 des Grundkörpers 1 dienen. Die Funktion der Tellerfedern 6 wird weiter unten erläutert.

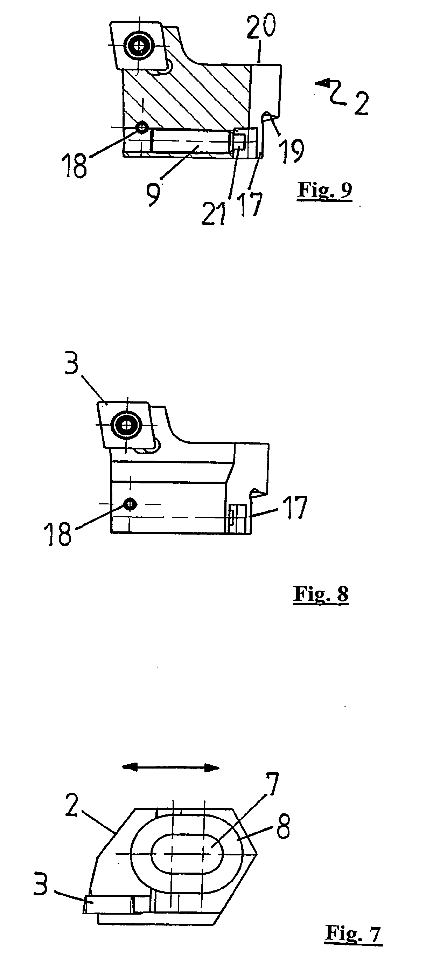

In der Figur 7 ist eine Draufsicht auf einen Schneidplattenhalter 2 gezeigt. Zu erkennen ist, daß der Schneidplattenhalter 2 einen Schneideinsatz 3 aufnimmt und eine als Langloch ausgebildete Bohrung 7 aufweist, mit deren Hilfe der Schneidplattenhalter 2 auf dem Grundkörper 1 befestigt werden kann.

Figur 8 zeigt eine Seitenansicht auf den Schneidplattenhalter 2.

Figur 9 zeigt eine Schnittansicht des entsprechenden Schneidplattenhalters 2. Der Schneidplattenhalter 2 hat eine obere Fläche 20 und eine untere Auflagefläche 19. Über die untere Auflagefläche 19 steht ein Vorsprung 17 vor, der derart ausgebildet ist, daß dessen Außenkontur im wesentlichen mit der Innenkontur der Nut 15 des Grundkörpers 1 übereinstimmt. Wird daher bei dem Grundkörper 1, der in den Figuren 4 bis 6 gezeigt ist, die Befestigungsschraube 5 samt Tellerfeder 6 entfernt, so kann der Schneidplattenhalter 2 derart auf den Grundkörper 1 aufgesetzt werden, daß dessen Auflagefläche 19 auf der Stirnfläche 14 zu liegen kommt, während der Vorsprung 17 in die Nut 15 des Grundkörpers 1 eingreift. In dieser Position kann der Schneidplattenhalter 2 in radialer Richtung, wie in Figur 7 durch den Doppelpfeil dargestellt ist, verschoben werden. Zur groben radialen Einstellung des Schneidplattenhalters 2 auf dem Grundkörper 1 können die Meß- bzw. Positioniermarken 11, 12 (siehe Figur 1) verwendet werden. Zur Befestigung des Schneidplattenhalters 2 auf dem Grundkörper 1 wird dann die Schraube 5 zusammen mit der Tellerfeder 6 durch die als Langloch ausgebildete Bohrung 7 des Schneidplattenhalters 2 in eine entsprechende Gewindebohrung innerhalb der Stirnfläche 14 des Grundkörpers 1 eingeschraubt. Dadurch, daß die Bohrung 7 als Langloch ausgebildet ist, kann eine begrenzte radiale Bewegung des Schneidplattenhalters 2 bei eingesetzter Schraube 5 erfolgen. Wie insbesondere in den Figuren 1 und 7 zu erkennen ist, weist die obere Fläche 20 des Schneidplattenhalters 2 eine Ausnehmung oder Ausfräsung 8 auf, die die als Langloch ausgebildete Bohrung 7 umgibt. Diese Ausnehmung 8 ist derart ausgebildet, daß die Tellerfeder 6 in die Ausnehmung 8 paßt. Darüber hinaus ist die Ausnehmung 8 so bemessen, daß bei auf die Schraube 5 aufgesetzter Tellerfeder 6 sichergestellt ist, daß in keiner Position der Schraube 5 in der als Langloch ausgebildeten Bohrung 7 das Gewinde der Schraube 5 gegen die Innenfläche der Bohrung 7 schlägt. Dies wird dadurch erreicht, daß bei einer radialen Verschiebung des Schneidplattenhalters 2 innerhalb der Nut 15, bevor das Gewinde der Schraube 5 gegen die Innenfläche der Bohrung 7 treten kann, die äußere Kante der Tellerfeder 6 an die Innenwand der Ausnehmung 8 anschlägt. Durch diese Maßnahme wird die Schraube 5 in vorteilhafter Weise vor Verschleiß geschützt.

Nachdem der Schneidplattenhalter 2 in radialer Richtung ebenfalls unter Zuhilfenahme der Positioniermarken 11, 12 grob justiert worden ist, wird die Schraube 5 derart angezogen, daß über die Tellerfeder 6 eine bestimmte Haltekraft auf den Schneidplattenhalter 2 ausgeübt wird. Dadurch ist sichergestellt, daß eine Relativbewegung des Schneidplattenhalters 2 gegenüber dem Grundkörper 1 nur unter Aufbringen einer Kraft, die die Haltekraft der Tellerfeder 6 übersteigt, erfolgen kann. Beispielsweise kann das Bohrwerkzeug in dieser Position in jeder beliebigen Lage, d. h. beispielsweise auch über Kopf, gehalten werden, ohne daß die Gefahr besteht, daß es zu einer selbsttätigen Relativbewegung zwischen Schneidplattenhalter 2 und Grundkörper 1 kommt.

Für die radiale Feinjustierung wird die Einstellschraube 21 verwendet, die innerhalb der zumindest teilweise als Gewindebohrung ausgeführten Bohrung 9 angeordnet ist. Die Bohrung 9 ist in der gezeigten Ausführungsform in radialer Richtung innerhalb des Vorsprunges 17 angeordnet, so daß, wie beispielsweise in Figur 1 zu erkennen ist, die Bohrung 9 bei aufgesetztem Schneidplattenhalter 2 innerhalb der Nut 15 liegt. Der in den Figuren 8 und 9 gezeigte Querstift 18, der erst nachdem die Schraube 21 in die Bohrung 9 eingebracht wurde, in den Körper des Schneidplattenhalters 2 eingebracht wird, dient lediglich dazu, ein versehentliches Herausfallen der Schraube 21 aus der Bohrung 9 zu verhindern. Die Bohrung 9 ist in der in Figuren 7 bis 9 gezeigten Ausführungsform in radialer Richtung nach innen, d. h. in den Figuren 7 bis 9 nach rechts offen, so daß, wenn die Schraube 21 in der Bohrung 9 eingeschraubt wird, die Spitze der Schraube 21 in radialer Richtung nach innen aus dem Vorsprung 17 hervortritt.

Das Zusammenspiel der einzelnen Teile wird deutlich anhand der Figuren 10 bis 15. Figur 10 zeigt eine Seitenansicht auf den Grundkörper 1 mit aufgesetzten Schneidplattenhaltern 2. Die Figuren 11 und 12 zeigen jeweils Schnitte entlang der Linie B-B bzw. C-C. Figur 11 zeigt beispielsweise einen Schnitt mit Blickrichtung von oben auf den Grundkörper 1. Deutlich zu erkennen sind die Nuten 15, in denen die Vorsprünge 17 der Schneidplattenhalter 2 geführt werden. Die Vorsprünge 17 sind derart an die Innenkontur der Nut 15 angepaßt, daß bei aufgesetztem Schneidplattenhalter 2 eine Bewegung des Schneidplattenhalters 2 relativ zu dem Grundköper 1 im wesentlichen nur in radialer Richtung bewegbar ist. Deutlich zu erkennen ist ebenfalls der Justierstift 4 in der Mitte des Grundkörpers 1. Figur 12 zeigt die zu Figur 11 komplementäre Schnittansicht mit Blick von unten nach oben, so daß von dem Schneideinsatz 2 die untere Auflagefläche 19 zu sehen ist. Anhand der Figuren 11 und 12 wird die Bedeutung der Justierschrauben 21 klar. Wird nämlich die Justierschraube 21 innerhalb der Bohrung 9 gedreht, so tritt das innere Ende der Justierschraube 21 aus dem Vorsprung 17 in Richtung des Justierstiftes 4 aus und tritt irgendwann mit diesem in Kontakt. Der Justierstift 4 bildet somit eine Art Widerlager für die Justierschrauben 21. Wird nun die Justierschraube 21 weiter gedreht, so wird die durch die Schrauben 5 über die Tellerfedern 6 auf den Schneidplattenhalter 2 aufgebrachte Haltekraft in radialer Richtung überwunden, so daß es zu einer Relativbewegung des Schneidplattenhalters 2 in Bezug auf den Grundkörper 1 kommt. Durch die radiale Anordnung der Schraube 21 in der in radialer Richtung verlaufenden Bohrung 9 wird gezielt eine Kraft ausschließlich in radialer Richtung aufgebracht, so daß es ausschließlich zu einer radialen Bewegung des Schneidplattenhalters 2 innerhalb der Nuten 15 kommt. Durch Drehen der Justierschraube 21 kann der Schneidplattenhalter 2 in radialer Richtung sehr exakt eingestellt werden.

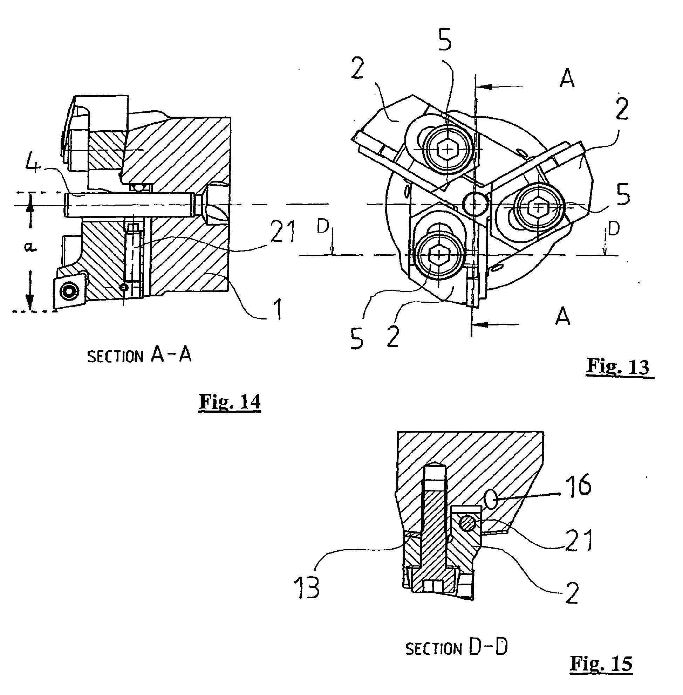

Zur Verdeutlichung zeigt die Figur 13 eine Ansicht von oben auf das Bohrwerkzeug mit aufgesetzten Schneidplattenhaltern 2, sowie die Figuren 14 und 15 jeweils Schnittansichten entlang der Linien A-A bzw. D-D.

Für die radiale Justierung des Schneidplattenhalters 2 auf dem Grundkörper 1 wird daher zunächst der Schneidplattenhalter 2 auf den Grundkörper 1 derart aufgesetzt, daß der Vorsprung 17 in der Nut 15 zu liegen kommt. Die Schraube 5 wird zusammen mit der Tellerfeder 6 durch die als Langloch ausgebildete Bohrung 7 des Schneidplattenhalters 2 in einer entsprechenden Gewindebohrung in der Auflagefläche 14 des Grundkörpers 1 eingesetzt. Dabei kommt die Tellerfeder 6 in der Ausnehmung 8, welche die Bohrung 7 umgibt, zu liegen. Der Schneidplattenhalter 2 kann nun grob justiert werden und durch leichtes Anziehen der Schraube 5 fixiert werden. Dabei ist darauf zu achten, daß der Schneidplattenhalter 2 in radialer Richtung nicht zu weit außen liegt, da, wie im folgenden noch einmal beschrieben wird, mit Hilfe der Einjustierschraube 21 nur eine Nachjustierung der Schneidplatten 3, 3', 3" bzw. der diese tragenden Schneidplattenhalter in radialer Richtung nach außen erfolgen kann. Nachdem die einzelnen Schneidplattenhalter 2 durch leichtes Anziehen der Schrauben 5 über die Tellerfedern 6 mit einer entsprechenden Haltekraft fixiert worden sind, erfolgt die Feinjustierung mit Hilfe der Justierschrauben 21, die wie beispielsweise in Figur 14 zu erkennen ist, in der Bohrung 9 in radialer Richtung nach innen, d. h. in Richtung des Justierstiftes 4 gedreht werden, bis sie sich an der Außenfläche des Justierstiftes 4 abstützen. Wird nun die Schraube 21 weiter gedreht, so führt dies in Figur 14 zu einer radialen Bewegung des Schneidplattenhalters 2 nach unten, so daß der Bohrdurchmesser der Schneidplatte 3 vergrößert wird.

Der Justierstift 4 kann für die Feinjustierung nicht nur als Widerlager dienen, sondern zusätzlich einen Meßpunkt zur Verfügung stellen, wie ebenfalls in Figur 14 angedeutet worden ist. Durch Messen des Abstandes a kann nämlich überprüft werden, ob die Schneidplatte 3 in radialer Richtung in der richtigen Position ist und gegebenenfalls in Abhängigkeit von der Messung durch Drehen der Schraube 21 korrigiert werden. Diese Messung kann beispielsweise mit einer Fest- oder Schieblehre erfolgen. Eine aufwendige Messung mit Hilfe eines sogenannten Voreinstellgerätes ist nicht notwendig. Diese Art der Messung ist insbesondere von Vorteil, wenn eine ungerade Anzahl von Schneidplattenhaltern 2 verwendet wird, da dann jedem Schneidplattenhalter 2 bzw. jeder Schneidplatte 3 keine diametral gegenüber angeordnete Schneidplatte 3, 3', 3" zugeordnet ist.

Nachdem mit Hilfe der Feinjustierschraube 21 eine Feinjustierung in radialer Richtung erfolgt ist, können die Schrauben 5 fest angezogen werden, so daß während der spanenden Bearbeitung beim Ineingrifftreten der Schneidplatten 3, 3', 3" mit dem Werkstück es zu keiner Relativbewegung zwischen dem Schneidplattenhalter 2 und dem Grundkörper 1 kommt.

Es versteht sich, daß das Widerlager bzw. der Abstützpunkt für die Feinjustierschrauben 21 nicht unbedingt an den Justierstift 4 vorgesehen sein müssen. Insbesondere bei Bohrwerkzeugen mit sehr großen Durchmesser erfordert dies nämlich einen entsprechenden Vorschub der Justierschraube 21 bevor sie mit dem Justierstift 4 in Eingriff tritt.

An dieser Stelle sei darauf hingewiesen, daß die Abschnitte der Stirnfläche 14, die für die Aufnahme der unteren Auflagefläche 19 der Schneidplattenhalter 2 vorgesehen sind, gegenüber der Radialebene leicht geneigt sind, um während des Anziehens der Befestigungsschraube 5, den Schneidplattenhalter gegen die Seitenwand der Nut 15 zu drücken und damit eine eindeutige Montageposition festzulegen. Dies ist besonders gut in Figur 15 zu erkennen. Die Neigung der als Montagefläche dienenden Abschnitte der Stirnflächen, auf denen auch die Distanzelemente 13 angeordnet sind, ist gegenüber der Radialebene vorzugsweise zwischen 4 und 12° und besonders bevorzugt um etwa 8° geneigt.

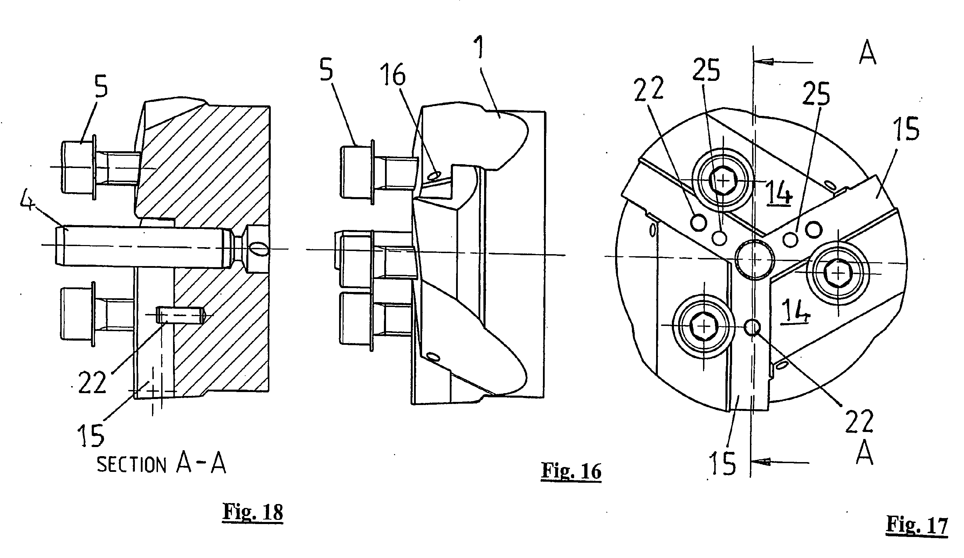

Daher ist in den Figuren 16 bis 21 eine alternative Ausführungsform des erfindungsgemäßen Bohrwerkzeuges gezeigt. In Figur 16 ist eine Seitenansicht des Grundkörpers 1 ohne aufgesetzte Schneidplattenhalter 2 dargestellt. Auch hier ist der Justierstift 4 sowie die Schrauben 5 mit zugeordneten Tellerfedern 6 zu sehen. Eine Draufsicht von oben auf den Grundkörper 1 der zweiten Ausführungsform ist in Figur 17 zu sehen. Deutlich zu erkennen ist, daß in den Nuten 15 zusätzliche Stifte 22 vorgesehen sind. Die Stifte 22 sind, wie u. a. in der Schnittansicht entlang der Linie A-A von Figur 17, die in Figur 18 gezeigt ist, zu erkennen ist, in dem Nutgrund der Nut 15 angeordnet. Diese Stifte 22 stellen die Anschlags- bzw. Widerlagerflächen für die Feinjustierschraube 21 zur Verfügung.

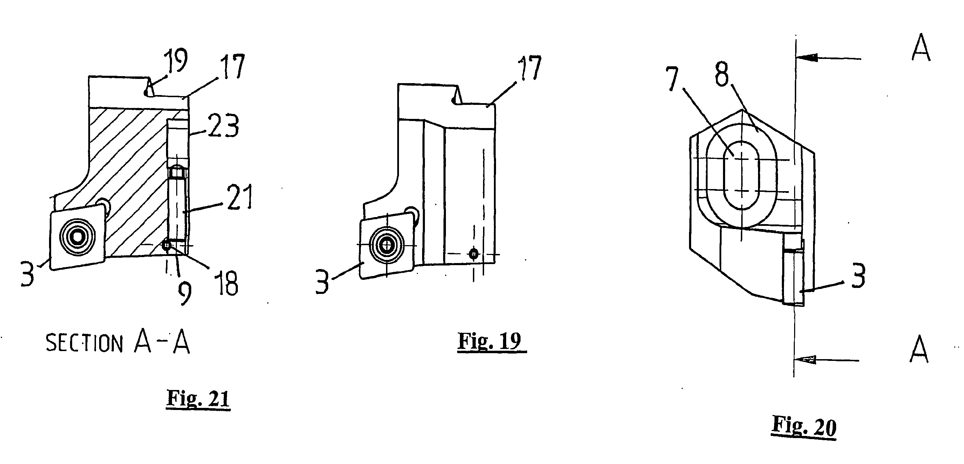

In den Figuren 19 bis 21 ist eine zweite Ausführungsform eines Schneidplattenhalters 2 gezeigt, der mit den zusätzlichen Stiften 22 der zweiten Ausführungsform des Grundkörpers 1 zusammenarbeitet. Deutlich zu erkennen ist, daß sich bei dieser Ausführungsform (siehe beispielsweise die Figur 21) die Bohrung 9 in radialer Richtung nicht durch den gesamten Vorsprung 17 erstreckt, sondern in einer länglichen Ausnehmung 23 endet. Die längliche Ausnehmung 23 ist derart ausgebildet, daß beim Aufsetzen des Schneidplattenhalters 2 auf den Grundkörper 1 der Stift 22 in die Ausnehmung 23 eindringt. Die radiale Feinjustierung des in den Figuren 19 bis 21 gezeigten Schneideinsatzes erfolgt dann derart, daß sich die Feinjustierschraube 21 an den Stift 22 abstützt und dadurch den Schneidplattenhalter 2 in radialer Richtung relativ zu dem Stift 22 bewegt, so daß sich der Stift 22 innerhalb der länglichen Ausnehmung 23 verschiebt.

Darüber hinaus begrenzt die Ausnehmung 23 die radiale Verschiebbarkeit des Schneidplattenhalters 2 in radialer Richtung, so daß während des Einstellvorgangs ein versehentliches Herausgleiten des Halters 2 aus der Nut 15 verhindert wird.

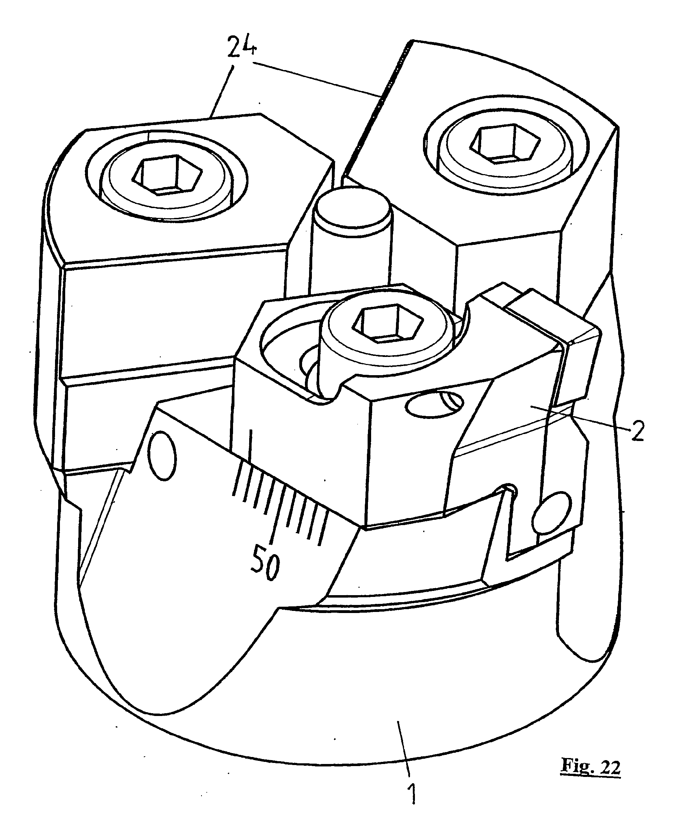

Schließlich ist in Figur 22 eine weitere Möglichkeit der Verwendung des erfindungsgemäßen Bohrwerkzeuges dargestellt. Hier wird das Werkzeug nur mit einer Schneide bzw. einem Schneidplattenhalter 2 bestückt. Um während der spanenden Bearbeitung die Nuten und Auflageflächen, der nicht mit Schneidplattenhaltern bestückten Aufnahmen zu schützen, sind in die beiden freien Nuten Blindstücke 24 eingesetzt. Die Blindstücke 24 werden ebenfalls mit Hilfe einer Befestigungsschraube an dem Grundkörper befestigt. Allerdings weisen die Blindstücke, die in Figur 22 gezeigt sind, keine längliche Bohrung auf, so daß die Blindstücke 24 hier nicht radial eingestellt werden können.

Die Blindstücke 24 haben neben dem Schutz der Oberflächen zusätzlich die Aufgabe, die Unwucht des Werkzeuges, die aufgrund der unsymmetrischen "Beladung" des Grundkörpers besteht, zumindest teilweise auszugleichen. Für manche Anwendungsfälle kann es von Vorteil sein, wenn auch die Blindstücke in radialer Richtung einstellbar sind, so daß mit Hilfe der Blindstücke 24 eine möglichst gute Auswuchtung des Werkzeuges erfolgen kann.

Die Blindstücke 24 haben in der gezeigten Ausführungsform an ihrer (nicht dargestellten) Auflagefläche einen sich in axialer Richtung erstreckenden Stift. Dieser Stift dringt beim Aufsetzen der Blindstücke 24 in die in den Nuten vorgesehenen Bohrungen 25 ein, die in den Figuren 4 und 17 gezeigt sind. Die entsprechenden Bohrungen 25 sind, wie ebenfalls in den Figuren 4 und 17 dargestellt ist, nur in zwei Nuten vorhanden. Durch diese Maßnahme wird sichergestellt, daß die Blindstücke nicht in die für den Schneidplattenhalter 2 vorgesehene Nut eingeschraubt werden. Dadurch "weiß" die Maschinensteuerung in welcher Nut die Schneidplatte angeordnet ist und kann das Schneidprogramm entsprechend anpassen.

### Bezugszeichenliste:

| | |
|---|---|
| 1 | Grundkörper |
| 2 | Schneidplattenhalter |
| 3, 3', 3" | Schneideinsatz, Schneidplatte |
| 4 | Justierstift |
| 5 | Befestigungsschraube |
| 6 | Tellerfedern |
| 7 | Bohrung |
| 8 | Ausnehmung |
| 9 | Bohrung |
| 11, 12 | Meß- bzw. Positioniermarken |
| 13, 13' | Distanz- bzw. Unterlegelemente |
| 14 | Stirnfläche |
| 15 | Nuten |
| 16 | Kühlmittelzufuhr |
| 17 | Vorsprung |
| 18 | Querschnitt |
| 19 | untere Auflagefläche |
| 20 | obere Fläche |
| 21 | Einstellschraube |
| 22 | Stifte |
| 23 | längliche Ausnehmung |
| 24 | Blindstück |
| 25 | Bohrung für Blindstück |
| a | Abstand |

## Patentansprüche

1. Grundkörper für ein Bohrwerkzeug, insbesondere ein Ausbohr-Schruppwerkzeug, in dessen Stirnflächenbereich (14) mindestens ein Schneidplattenhalter (2) aufgenommen werden kann, **dadurch gekennzeichnet, daß** zumindest ein mit dem Grundkörper (1) verbundener Justierstift (4) in axialer Richtung mit dem Schneidplattenhalter (2) und/oder der Schneidplatte (3, 3', 3") überlappt, so daß die radiale Einstellung des Schneidplattenhalters (2) in Bezug auf den Grundkörper (1) durch Messen des radialen Abstandes (a) zwischen einem definierten Punkt des Schneidplattenhalters (2) oder der auf dem Schneidplattenhalter (2) aufgenommenen Schneidplatte (3, 3', 3") und dem Justierstift (4) erfolgen kann.

2. Grundkörper nach Anspruch 1, **dadurch gekennzeichnet, daß** eine Anzahl N Schneidplattenhalter (2) auf dem Grundkörper (1) aufgenommen werden kann und N Justierstifte (4) vorgesehen sind, von denen je einer einem Schneidplattenhalter (2) bzw. einer Schneidplatte (3) zugeordnet ist.

3. Grundkörper nach Anspruch 1, **dadurch gekennzeichnet, daß** der Justierstift (4) auf der Drehachse des Werkzeugs zentriert angeordnet ist.

4. Grundkörper nach einem der Ansprüche 1 bis 3, **dadurch gekennzeichnet, daß** der Justierstift (4) eine zylindrische Form hat.

5. Grundkörper nach Anspruch 3, **dadurch gekennzeichnet, daß** der Justierstift (4) den Querschnitt eines regelmäßigen Polygons mit N Ecken hat, wobei N die Anzahl der auf dem Grundkörper (1) aufnehmbaren Schneidplattenhalter (2) ist.

6. Grundkörper nach einem der Ansprüche 2 bis 5, **dadurch gekennzeichnet, daß** N eine ungerade Zahl, vorzugsweise 3, ist.

7. Grundkörper nach einem der Ansprüche 1 bis 6, **dadurch gekennzeichnet, daß** die Stirnfläche (14) mindestens eine in radialer Richtung verlaufende Nut (15) aufweist, die für die Aufnahme eines der Nutform entsprechenden vorzugsweise länglichen Vorsprungs (17) des Schneidplattenhalters (2) vorgesehen ist.

8. Grundkörper nach Anspruch 7, **dadurch gekennzeichnet, daß** die Nut (15) einen im wesentlichen U-förmigen Querschnitt aufweist.

9. Grundkörper nach Anspruch 7 oder 8, **dadurch gekennzeichnet, daß** der Nutgrund zumindest einen Vorsprung (22), vorzugsweise in Form eines Stiftes, aufweist, der dafür vorgesehen ist, in eine Ausnehmung (23) in dem Schneidplattenhalter (2) zu greifen und die radiale Verschiebbarkeit des Schneidplattenhalter (2) zu begrenzen.

10. Grundkörper nach einem der Ansprüche 1 bis 9, **dadurch gekennzeichnet, daß** eine Einrichtung (5, 6) zum Halten eines Schneidplattenhalters (2) an der Stirnfläche (14) mit einer einstellbaren Haltekraft vorgesehen ist.

11. Grundkörper nach Anspruch 10, **dadurch gekennzeichnet, daß** die Einrichtung (5, 6) zum Halten eines Schneidplattenhalters (2) aus einer Schraube (5), die dafür vorgesehen ist, durch eine längliche Öffnung (7) in dem Schneidplattenhalter (2) zu greifen, und einer Feder, vorzugsweise einer Tellerfeder (6), besteht.

12. Grundkörper nach einem der Ansprüche 1 bis 11, **dadurch gekennzeichnet, daß** eine Einrichtung (13, 13') zur axialen Einstellung des Schneidplattenhalters (2) vorgesehen ist.

13. Grundkörper nach Anspruch 12, **dadurch gekennzeichnet, daß** die Einrichtung (13, 13') zur axialen Einstellung des Schneidplattenhalters (2) aus Unterlegelementen (13, 13') besteht, die dafür vorgesehen sind, zwischen Schneidplattenhalter (2) und Stirnfläche (14) des Grundkörpers (1) angeordnet zu werden.

14. Grundkörper nach einem der Ansprüche 1 bis 13, **dadurch gekennzeichnet, daß** für jeden Schneidplattenhalter (2) eine Einrichtung (21) zur radialen Einstellung des Schneidplattenhalters (2) vorgesehen ist.

15. Schneidplattenhalter mit einem Grundkörper (1) nach einem der Ansprüche 1 bis 14 mit einem Sitz zur Aufnahme einer Schneidplatte (3, 3', 3"), wobei eine Auflagefläche (19) zur Auflage des Schneidplattenhalters (2) auf der Stirnfläche (14) eines Grundkörpers (1) eines Bohrwerkzeugs einen, vorzugsweise länglichen, über die Auflagefläche (14) hervorstehenden Vorsprung (17) für das Eingreifen in eine auf der Stirnfläche (14) angeordnete Nut (15) aufweist, **dadurch gekennzeichnet, daß** der Schneidplattenhalter (2) eine Einrichtung (21) zur radialen Einstellung des Schneidplattenhalters (2) in Bezug auf den Grundkörper (1) aufweist, die eine Schraube (21) umfaßt, die dafür vorgesehen ist, sich an einem fest mit dem Grundkörper (1) verbundenen Anschlagselement (4, 22) abzustützen.

16. Schneidplattenhalter nach Anspruch 15, **dadurch gekennzeichnet, daß** die Schraube (21) in Längsrichtung durch zumindest einen Teil des länglichen Vorsprungs (17) verläuft.

17. Schneidplattenhalter nach einem der Ansprüche 15 bis 16, **dadurch gekennzeichnet, daß** der längliche Vorsprung (17) eine vorzugsweise längliche Aussparung (23) aufweist, die derart angeordnet ist, daß ein auf dem Nutgrund (15) der Stirnfläche (14) des Bohrwerkzeuges angeordneter Vorsprung (22) in die Aussparung (23) eingreift und dadurch die radiale Verschiebbarkeit des Schneidplattenhalters (2) in der Nut (15) zumindest in eine Richtung begrenzt.

18. Schneidplattenhalter nach Anspruch 17, **dadurch gekennzeichnet, daß** der längliche Vorsprung (17) eine Gewindebohrung (9) aufweist, die sich in Längsrichtung in die längliche Aussparung (23) öffnet.

19. Schneidplattenhalter nach einem der Ansprüche 15 bis 18, **dadurch gekennzeichnet, daß** ein Langloch (7) zur Befestigung des Halters (2) auf dem Grundkörper (1) mittels einer sich durch das Langloch (7) erstreckenden und in eine Gewindebohrung auf dem Grundkörper (1) eingreifende Schraube (5) vorgesehen ist.

20. Schneidplattenhalter nach Anspruch 19, **dadurch gekennzeichnet, daß** auf der der Auflagefläche (14) abgewandten Seite des Langloches (7) eine Ausfräsung (8) zur Aufnahme einer zwischen Schraubenkopf (5) und Langloch (7) angeordneten Tellerfeder (6) vorgesehen ist.

## Claims

1. Base body for a drilling tool, in particular a reboring-roughing tool, whose front surface region (14) can accommodate at least one cutting insert holder (2), **characterized in that** at least one adjusting pin (4) connected to the base body (1) axially overlaps the cutting insert holder (2) and/or the cutting insert (3, 3', 3"), so that the radial adjustment of the cutting insert holder (2) with respect to the base body (1) can be carried out by measuring the radial deviation (a) between a defined point of the cutting insert holder (2) or the cutting insert (3, 3', 3") accommodated on the cutting insert holder (2) and the adjusting pin (4).

2. Base body according to claim 1, **characterized in that** a N number of cutting insert holders (2) can be accommodated on the base body (1) and N adjusting pins (4) are provided, one of which is each associated with a cutting insert holder (2) and/or a cutting insert (3).

3. Base body according to claim 1, **characterized in that** the adjusting pin (4) is centrally aligned with the axis of rotation of the tool.

4. Base body according to any one of claims 1 to 3, **characterized in that** the adjusting pin (4) has a cylindrical form.

5. Base body according to claim 3, **characterized in that** the adjusting pin (4) has the cross section of a regular polygon with N angles, whereby N is the number of cutting insert holders (2), which can be on the base body (1).

6. Base body according to any one of claims 2 to 5, **characterized in that** N is an odd number, preferably 3.

7. Base body according to any one of claims 1 to 6, **characterized in that** the front surface (14) has at least one groove (15) running in the radial direction, which groove is intended to accommodate a preferably longitudinal projection (17) of the cutting insert holder (2) corresponding to the groove shape.

8. Base body according to claim 7, **characterized in that** the groove (15) has an essentially U-shaped cross section.

9. Base body according to claim 7 or 8, **characterized in that** the groove bottom has at least one projection (22), preferably in the form of a stud, which is intended to engage in a recess (23) in the cutting insert holder (2) and to limit the radial adjustment of the cutting insert holder (2).

10. Base body according to any one of claims 1 to 9, **characterized in that** a device (5, 6) for supporting a cutting insert holder (2) on the front surface (14) is provided with variable retaining force.

11. Base body according to claim 10, **characterized in that** the device (5, 6) for holding a cutting insert holder (2) consists of a screw (5), which is intended to reach through a longitudinal opening (7) in the cutting insert holder (2) and a spring, preferably a disk spring (6).

12. Base body according to any one of claims 1 to 11, **characterized in that** a device (13, 13') is provided for axial adjustment of the cutting insert holder (2).

13. Base body according to claim 12, **characterized in that** the device (13, 13') for the axial adjustment of the cutting insert holder (2) consists of shims (13, 13'), which are intended to be arranged between cutting insert holder (2) and front surface (14) of the base body (1).

14. Base body according to any one of claims 1 to 13, **characterized in that** for each cutting insert holder (2) a device (21) is provided for the radial adjustment of the cutting insert holder (2).

15. Cutting insert holder for use with a base body (1) according to any one of claims 1 to 14 with a seat for receiving a cutting insert (3, 3', 3"), **characterized in that** a bearing surface (19) for supporting the cutting insert holder (2) on the front surface (14) of a base body (1) of a drilling tool has a preferably longitudinal projection (17) overlapping the bearing surface (19) for engaging in a groove (15) arranged on the front surface (14), **characterized in that** the cutting insert holder (2) has a device (21) for radial adjustment of the cutting insert holder (2) with respect to the base body (1), which comprises a screw (21), which is intended to abut against a stop element (4, 22) firmly connected to the base body (1).

16. Cutting insert holder according to claim 15, **characterized in that** the screw (21) in the longitudinal direction runs through at least one part of the longitudinal projection (17).

17. Cutting insert holder according to any one of claims 15 to 16, **characterized in that** the projection (17) has a preferably oblong recess (23), which is arranged in such a manner that a projection (22) located on the groove bottom (15) of the front surface (14) of the drilling tool engages in the recess (23) and thus the radial adjustment of the cutting insert holder (2) in the groove (15) is limited at least in one direction.

18. Cutting insert holder according to claim 17, **characterized in that** the projection (17) has a tapped hole (9), which in the longitudinal direction opens into the oblong recess (23).

19. Cutting insert holder according to any one of claims 15 to 18, **characterized in that** a slotted hole (7) is provided for attaching the holder (2) to the base body (1) by means of a screw (5) extending through the slotted hole (7) and engaging in a threaded hole on the base body (1).

20. Cutting insert holder according to claim 19, **characterized in that** on the side of the slotted hole (7) facing away from the front surface (14) a countersink (8) is provided to seat a disk spring (6) arranged between screw head (5) and slotted hole (7).

## Revendications

1. Corps de base destiné à un outil de forage, en particulier à un outil de forage/dégrossissage, dont la zone de surface frontale (14) peut recevoir au moins un support de plaque de coupe (2), **caractérisé en ce qu'**au moins une tige de réglage (4) reliée au corps de base (1) chevauche le support de plaque de coupe (2) et/ou la plaque de coupe (3, 3', 3") en direction axiale, de telle façon que le réglage radial du support de plaque de coupe (2) par rapport au corps de base (1) peut être effectué par mesure de l'écart radial (a) entre un point défini du support de plaque de coupe (2) ou de la plaque de coupe (3, 3', 3") reçue sur le support de plaque de coupe (2), et la tige de réglage (4).

2. Corps de base selon la revendication 1, **caractérisé en ce qu'**un nombre N de supports de plaque de coupe (2) peut être reçu sur le corps de base (1) et **en ce que** sont prévues N tiges de réglage (4) dont chacune est associée à un support de plaque de coupe (2) ou à une plaque de coupe (3).

3. Corps de base selon la revendication 1, **caractérisé en ce que** la tige de réglage (4) est disposée de manière centrée sur l'axe de rotation de l'outil.

4. Corps de base selon l'une des revendications 1 à 3, **caractérisé en ce que** la tige de réglage (4) a une forme cylindrique.

5. Corps de base selon la revendication 3, **caractérisé en ce que** la tige de réglage (4) a la section transversale d'un polygone régulier à N angles, N étant le nombre de supports de plaque de coupe (2) pouvant être reçu sur le corps de base (1).

6. Corps de base selon l'une des revendications 2 à 5, **caractérisé en ce que** N est un nombre impair, de préférence 3.

7. Corps de base selon l'une des revendications 1 à 6, **caractérisé en ce que** la surface frontale (14) présente au moins une rainure (15) s'étendant en direction radiale, prévue pour recevoir une saillie (17) du support de plaque de coupe (2), de préférence de forme allongée, correspondant à la forme de la rainure.

8. Corps de base selon la revendication 7, **caractérisé en ce que** la rainure (15) présente une section transversale sensiblement en forme de U.

9. Corps de base selon la revendication 7 ou 8, **caractérisé en ce que** le fond de rainure présente au moins une saillie (22), de préférence sous la forme d'une tige, laquelle est prévue pour s'engager dans un évidement (23) pratiqué dans le support de plaque de coupe (2) et limiter la possibilité de déplacement radial du support de plaque de coupe (2).

10. Corps de base selon l'une des revendications 1 à 9, **caractérisé en ce qu'**est prévu un dispositif (5, 6) destiné à maintenir un support de plaque de coupe (2) sur la surface frontale (14) au moyen d'une force de retenue réglable.

11. Corps de base selon la revendication 10, **caractérisé en ce que** le dispositif (5, 6) destiné au maintien d'un support de plaque de coupe (2) est constitué d'une vis (5), prévue pour s'engager à travers une ouverture oblongue (7) pratiquée dans le support de plaque de coupe (2), et d'un ressort, de préférence, une rondelle-ressort (6).

12. Corps de base selon l'une des revendications 1 à 11, **caractérisé en ce qu'**est prévu un dispositif (13, 13') pour le réglage axial du support de plaque de coupe (2).

13. Corps de base selon la revendication 12, **caractérisé en ce que** le dispositif (13, 13') de réglage axial du support de plaque de coupe (2) est constitué d'éléments de calage (13, 13') prévus pour être disposés entre le support de plaque de coupe (2) et la surface frontale (14) du corps de base (1).

14. Corps de base selon l'une des revendications 1 à 13, **caractérisé en ce qu'**est prévu, pour chaque support de plaque de coupe (2), un dispositif (21) de réglage radial du support de plaque de coupe (2).

15. Support de plaque de coupe, comprenant un corps de base (1) selon l'une des revendications 1 à 14, pourvu d'un logement pour recevoir une plaque de coupe (3, 3', 3"), dans lequel une surface d'appui (19) destinée à l'appui du support de plaque de coupe (2) sur la surface frontale (14) d'un corps de base (1) d'un outil de forage, présente une saillie (17), de préférence de forme allongée, s'étendant au-delà de la surface d'appui (19), destinée à s'engager dans une rainure (15) disposée sur la surface frontale (14), **caractérisé en ce que** le support de plaque de coupe (2) présente un dispositif (21) destiné au réglage radial du support de plaque de coupe (2) par rapport au corps de base (1), qui comprend une vis (21) prévue pour venir en appui contre un élément formant butée (4, 22) solidaire du corps de base (1).

16. Support de plaque de coupe selon la revendication 15, **caractérisé en ce que** la vis (21) s'étend en direction longitudinale à travers au moins une partie de la saillie (17) de forme allongée.

17. Support de plaque de coupe selon l'une des revendications 15 ou 16, **caractérisé en ce que** la saillie (17) de forme allongée présente un évidement (23), de préférence de forme allongée, disposé de telle façon qu'une saillie (22) disposée sur le fond de rainure (15) de la surface frontale (14) de l'outil de forage s'engage dans évidement (23) et limite ainsi dans une direction la possibilité de déplacement radial du support de plaque de coupe (2) dans la rainure (15).

18. Support de plaque de coupe selon la revendication 17, **caractérisé en ce que** la saillie (17) de forme allongée présente un alésage taraudé (9) qui s'ouvre en direction longitudinale dans l'évidement (23) de forme allongée.

19. Support de plaque de coupe selon l'une des revendications 15 à 18, **caractérisé en ce qu'**est prévue une ouverture oblongue (7) pour la fixation du support (2) sur le corps de base (1) au moyen d'une vis (5) s'étendant à travers l'ouverture oblongue (7) et s'engageant dans un alésage taraudé sur le corps de base (1).

20. Support de plaque de coupe selon la revendication 19, **caractérisé en ce qu'**est prévue, sur le côté de l'ouverture oblongue (7) opposé à la surface d'appui (19), une fraisure (8) destinée à recevoir une rondelle-ressort (6) disposée entre la tête de vis (5) et l'ouverture oblongue (7).
